# EUROPÄISCHE PATENTANMELDUNG

(11) **EP 4 628 653 A1**
(43) Veröffentlichungstag der Anmeldung: **08.10.2025**
(21) Anmeldenummer: 24168092.5
(22) Anmeldetag: 02.04.2024
(51) Int. Cl.: E02B 8/02, B01D 33/00

(54) **RECHENANLAGE ZUR MECHANISCHEN ENTFERNUNG VON GROBSTOFFEN AUS EINEM FLÜSSIGKEITSSTROM**

(71) Anmelder: Schneider, Valeri, 6300 Zug (CH); Sutyaginskiy, Evgeny, 53721 Siegburg (DE); Sutyaginskiy, Daniel, 53721 Siegburg (DE)
(72) Erfinder: Schneider, Valeri, 6300 Zug (CH)
(74) Vertreter: KBN IP Patentanwälte Partnerschaft mbB

(57) **Zusammenfassung**

Rechenanlage zur mechanischen Entfernung von Grobstoffen aus einem Flüssigkeitsstrom, umfassend einen Rechen (2) mit mehreren äquidistant voneinander beabstandeten Rechenstäben (3) und eine von einem Antrieb bewegbare und zwischen die Rechenstäbe (3) greifende Harke (4), wobei die Rechenstäbe (3) in einer Durchströmrichtung (D) des Flüssigkeitsstromes betrachtet U-förmig ausgebildet und als Schar von Parallelkurven angeordnet sind und jeweils erste und zweite Schenkel (3a, 3c) und einen diese verbindenden Kreisbogen (3b) umfassen und die Harke (4) von einer ersten Endposition (4a) am freien Ende der ersten Schenkel (3a) linear entlang der ersten Schenkel (3a) bis zu den Kreisbögen (3b), von dort in einer Drehbewegung entlang der Kreisbögen (3b) bis zu den zweiten Schenkeln (3c) und von dort linear entlang der zweiten Schenkel (3c) bis zu einer zweiten Endposition (4b) am freien Ende der zweiten Schenkel (3c) und wieder zurück bewegbar ist.

## Beschreibung

Die Erfindung betrifft eine Rechenanlage zur mechanischen Entfernung von Grobstoffen aus einem Flüssigkeitsstrom, umfassend einen Rechen mit mehreren äquidistant voneinander beabstandeten Rechenstäben und eine von einem Antrieb bewegbare und zwischen die Rechenstäbe greifende Harke.

Rechenanlagen der eingangs genannten Art sind bekannt, wozu beispielhaft auf die DE 44 06122A1 und die DD111570 verwiesen wird. Derartige Rechenanlagen dienen beispielsweise in Klärwerken dazu, den zugeführten Flüssigkeitsstrom, insbesondere Schmutzwasser, von mitgeführten Grobstoffen zu befreien. Dazu wird der Flüssigkeitsstrom in einer Durchströmrichtung durch den Rechen geleitet, d. h. dieser tritt zwischen den Rechenstäben hindurch, wobei Grobstoffe, deren Abmessungen größer als der Abstand benachbarter Rechenstäbe ist, zurückgehalten werden. Diese zurückgehaltenen Rohstoffe werden sodann periodisch oder kontinuierlich mit der zwischen die Rechenstäbe greifenden Harke entfernt, um einer Verstopfung des Rechnens entgegenzuwirken.

Übliche Rechenanlagen verfügen über einen Rechen mit mehreren äquidistant voneinander beabstandeten geraden Rechenstäben, die nach Art eines regelmäßigen Gitters angeordnet sind. Die Harke wird stromaufwärts der Rechenstäbe in den Flüssigkeitsstrom abgesenkt und greift am tiefsten Punkt mit entsprechenden Zinken zwischen die Rechenstäbe, um daraufhin parallel zu den Rechenstäben aufwärts angehoben zu werden, wobei die angestauten Grobstoffe mitgenommen werden. Sobald die Harke aus dem Flüssigkeitsstrom nach oben herausgehoben wird, werden auch die mitgenommenen Grobstoffe aus dem Flüssigkeitsstrom entfernt und können beispielsweise über eine entsprechende Übergabeeinrichtung an eine Förderanlage übergeben werden. Anschließend wird die Harke erneut stromaufwärts der Rechenstäbe in den Flüssigkeitsstrom abgesenkt und erneut zwischen die Rechenstäbe geführt. In der Praxis tritt dabei häufiger das Problem auf, dass bei am Rechen anliegenden Grobstoffen oder infolge der Entfernung großer Grobstoffe der Rechen seine ursprüngliche Ausrichtung verliert und das Eingreifen zwischen benachbarten Rechenstäben nicht mehr in der gewünschten Weise stattfindet. Dies zieht regelmäßig eine Betriebsunterbrechung mit entsprechendem Austausch bzw. Neujustierung der Harke nach sich. Außerdem birgt eine solchermaßen bewegte Harke eine große Quetschgefahr für im Flüssigkeitsstrom schwimmende Fische.

Aufgabe der Erfindung ist es, eine Rechenanlage eingangs genannten Art vorzuschlagen, die bei einfachem Aufbau eine besonders effektive Reinigung von Grobstoffen und hohe Dauerzuverlässigkeit bietet.

Zur Lösung der gestellten Aufgabe wird erfindungsgemäß die Ausgestaltung einer Rechenanlage gemäß den Merkmalen des Patentanspruches 1 vorgeschlagen.

Vorteilhafte Ausgestaltungen und Weiterbildungen der Erfindung sind Gegenstand der abhängigen Ansprüche.

Der erfindungsgemäße Vorschlag sieht vor, dass die Rechenstäbe in einer Durchströmrichtung des Flüssigkeitsstroms betrachtet U-förmig ausgebildet und als Schar von Parallelkurven angeordnet sind und jeweils erste und zweite Schenkel und einen diese verbindenden Kreisbogen umfassen und die Harke von einer ersten Endposition am freien Ende der ersten Schenkel linear entlang der ersten Schenkel bis zu den Kreisbögen, von dort in einer Drehbewegung entlang der Kreisbögen bis zu den zweiten Schenkeln und von dort linear entlang der zweiten Schenkel bis zu einer zweiten Endposition am freien Ende der zweiten Schenkel und wieder zurück bewegbar ist.

Erfindungsgemäß wird demgemäß ein Rechen vorgeschlagen, der nicht ausschließlich geradlinig erstreckte und parallel zueinander angeordnete Rechenstäbe umfasst, sondern die Rechenstäbe sind in Durchströmrichtung des Flüssigkeitsstroms betrachtet U-förmig als Schar von Parallelkurven angeordnet. Zudem sind alle Rechenstäbe der Schar von Parallelkurven mit gleichen Abständen voneinander, d. h. äquidistant angeordnet. Es ist somit möglich, mit einer Harke den gesamten Verlauf der Rechenstäbe abzufahren, wozu eine lineare Bewegung von der erste Endposition am freien Ende der ersten Schenkel bis zu den Kreisbögen, von dort in einer Drehbewegung entlang der Kreisbögen bis zu den zweiten Schenkeln überlagert und von dort wieder linear entlang der zweiten Schenkel bis zur zweiten Endposition am freien Ende der zweiten Schenkel überlagert wird. Aufgrund dieser Ausgestaltung ist es insbesondere möglich, die Harke intermittierend zwischen der ersten und zweiten Endposition hin und her fahren zu lassen, wobei sie permanent zwischen die Rechenstäbe greift und insoweit permanent in Eingriff mit dem Rechen steht, womit Fehljustierungen beim Eintauchen zwischen die Rechenstäbe nicht mehr auftreten können und Gefahren für Fische sicher ausgeschlossen sind.

Nach einem Vorschlag der Erfindung umfasst der Antrieb der Harke einen Linearantrieb und einen Schwenkantrieb, die unabhängig voneinander steuerbar sind. Insbesondere kann der Schwenkantrieb gemeinsam mit der Harke vom Linearantrieb verlagert werden, sodass zunächst der Linearantrieb die Harke mit dem Schwenkantrieb entlang der ersten Schenkel linear verfährt, bis der lineare Antrieb an einen Endpunkt gelangt, der mit dem Übergang der ersten Schenkel zu den Kreisbögen übereinstimmt. An dieser Position kann sodann der Schwenkantrieb aktiviert werden und die Harke in einer Drehbewegung entlang der Kreisbögen bis zu den zweiten Schenkeln fortführen, woraufhin erneut der lineare Antrieb aktiviert wird und in entgegengesetzter Richtung die Harke mitsamt des Schwenkantriebs entlang der zweiten Schenkel bis zur zweiten Endposition verfährt. Anschließend kann dieser Prozess in umgekehrter Reihenfolge erneut gestartet werden, um die Harke von der zweiten Endposition über die Kreisbögen zur ersten Endposition zu verfahren.

Der lineare Antrieb kann nach einem Vorschlag der Erfindung von einer drehbar angetriebenen Gewindespindel und einer linear auf dieser verfahrbaren Spindelmutter gebildet sein, die mit der Harke sowie gegebenenfalls auch mit dem Schwenkantrieb verbunden ist.

Der Schwenkantrieb hingegen kann nach einem weiteren Vorschlag der Erfindung von einer von einem Antriebsmotor drehbaren und entlang ihrer Längsachse teleskopierbaren Antriebswelle und einem mit der Antriebswelle verbundenen Winkeltrieb gebildet sein, der mit der Harke verbunden ist. Durch eine solche Anordnung ist es möglich, den beispielsweise elektrisch angetriebenen Antriebsmotor am oberen Ende der entlang ihrer Längsachse teleskopierbaren Antriebswelle anzuordnen, sodass er stets oberhalb der Rechenanlage und damit oberhalb des Flüssigkeitsstroms angeordnet ist.

Die Antriebswelle verläuft bevorzugt im mittleren Bereich des Rechnens zwischen dem ersten und zweiten Schenkel des innersten Rechenstabes, wobei nach einem weiteren Vorschlag der Erfindung zur Erhöhung der Filtrationsleistung in Durchströmrichtung der Antriebswelle vorgelagert eine mit Durchbrechungen versehene Abdeckung des mittleren Bereichs vorgesehen ist. Eine solche Abdeckung kann beispielsweise aus einem biegsamen gelochten Band gebildet sein, welches bei der Bewegung der Harke mitgezogen wird und auf einer oberen und unteren Auf- und Abwickeltrommel aufgewickelt wird.

Die Harke der erfindungsgemäßen Rechenanlage kann nach einem Vorschlag der Erfindung eine auf den Rechenstäben aufliegende Schiene und auf der den Rechenstäben zugewandten Seite der Schiene vorstehende Zinken aufweisen, die zwischen den ersten und zweiten Endpositionen permanent in jeweils einen Freiraum zwischen benachbarten Rechenstäben eingreifen. Die Schiene gleitet dementsprechend auf den Rechenstäben und Zinken zwischen Rechenstreben, um den Rechen bei jeder Bewegung der Harke vollständig von Grobstoffen abzureinigen.

Auf ihrer den Rechenstäben abgewandten Seite kann die Harke nach einem weiteren Vorschlag der Erfindung einen vorstehenden Schieber aufweisen, dessen Ober- und Unterseite jeweils konkav ausgeformt sind, sodass sich bei Bewegung der Harke eine Mulde bindet, in der die abgestreiften Grobstoffe gesammelt und von der Harke aus dem Flüssigkeitsstrom entfernt werden.

Eine die Ober- und Unterseite verbindende und den Rechenstäben abgewandte Anströmkante des Schiebers kann zudem konvex ausgeformt sein, um Turbulenzen um den Schieber zu reduzieren und so einen Rückfall von Grobstoffen in den Flüssigkeitsstrom zu minimieren.

Weiterhin kann vorgesehen sein, dass jeder der ersten und zweiten Endposition zugeordnet jeweils eine Übergabeeinrichtung zur Übernahme von Grobstoffen angeordnet ist, die bei Erreichen der ersten bzw. zweiten Endposition von der Harke an die Übernahmeeinrichtung übergeben werden.

Die erfindungsgemäße Rechenanlage ist insbesondere dazu vorgesehen, in einen oberseitig offenen Kanal zur Führung des Flüssigkeitsstroms eingebracht zu werden, wobei die Endpositionen wie auch sämtliche Antriebe der Harke oberhalb des Flüssigkeitsstromes angeordnet werden.

Schließlich kann nach einem weiteren Vorschlag der Erfindung zur Erhöhung der Filtrationsleistung der erfindungsgemäßen Rechenanlage dem äußeren Rechenstab vorgelagert mindestens ein weiterer U-förmig gebogener und äquidistant angeordneter Rechenstab vorgesehen sein, die insoweit mit Versatz und parallel zueinander stromaufwärts des Rechens an den Seiten desselben angeordnet sind, um eine zusätzliche Filtrationsfläche zu bilden, die angewinkelt zur Durchströmrichtung positioniert sind. Durch Ausformung der Harke mit entsprechenden Auslegern kann sichergestellt werden, dass auch diese zusätzlichen Rechenstäbe bei Bewegung der Harke überstrichen und in deren Zwischenräume mit entsprechenden Zinken eingegriffen wird.

Weitere Ausgestaltungen und Einzelheiten der Erfindung werden nachfolgend anhand der ein Ausführungsbeispiel darstellenden Zeichnung erläutert. Es zeigen:
- Figur 1: die Aufsicht auf eine erfindungsgemäße Rechenanlage in Durchströmrichtung des Flüssigkeitsstroms;
- Figur 2: einen seitlichen Schnitt durch die Rechenanlage gemäß Figur 1;
- Figur 3: einen Schnitt durch die Harke der erfindungsgemäßen Rechenanlage.

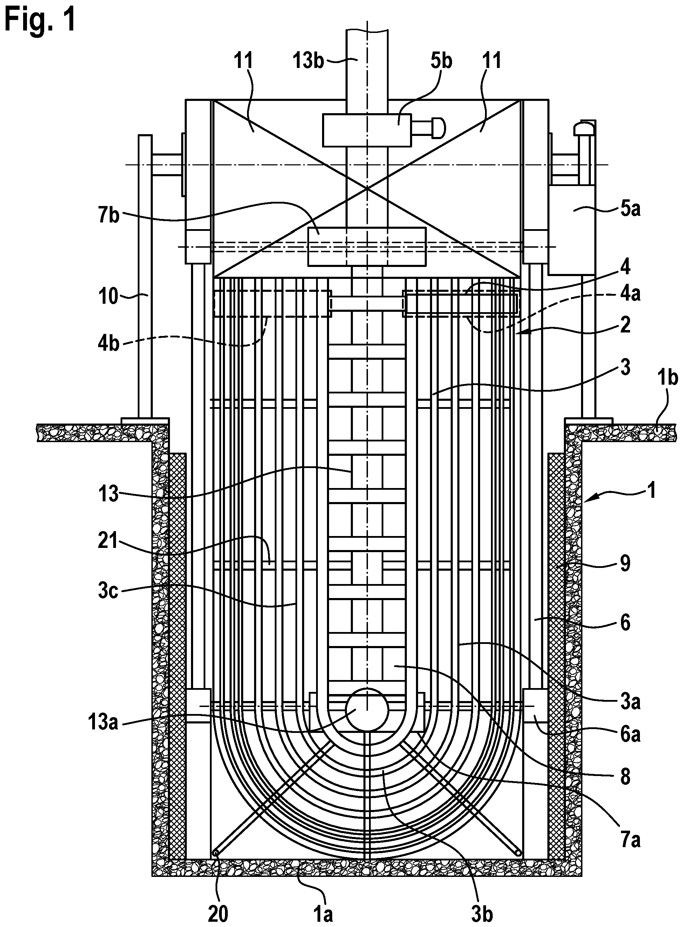

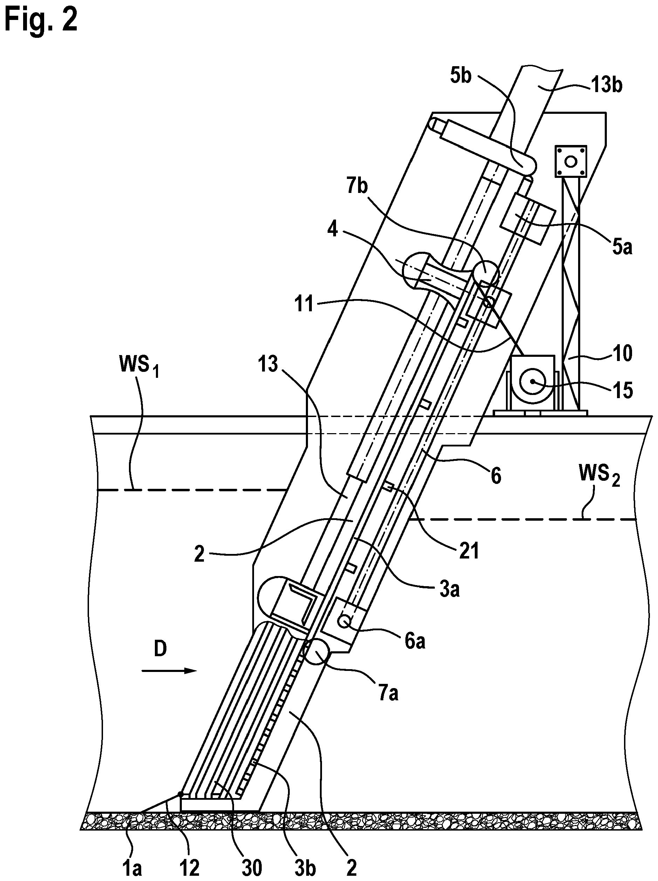

Aus den Figuren 1 und 2 ist eine Rechenanlage zur mechanischen Entfernung von Grobstoffen aus einem Flüssigkeitsstrom, insbesondere einem Abwasserstrom, ersichtlich, die in einen oberseitig offenen Kanal 1 mit Kanalboden 1a und einem oberen Kanalrand 1b eingesetzt ist.

Die Rechenanlage umfasst einen in den Kanal 1 eintauchenden Rechen 2, der eine Vielzahl von äquidistant voneinander beabstandeten Rechenstäben 3 umfasst. Wie insbesondere aus der Darstellung gemäß Figur 1 ersichtlich, sind alle Rechenstäbe 3 in einer Durchströmrichtung D des Flüssigkeitsstromes betrachtet U-förmig ausgebildet und als Schar von Parallelkurven in einer gemeinsamen Ebene angeordnet. Entsprechend der U-förmigen Konfiguration umfassen alle Rechenstäbe 3 jeweils erste und zweite Schenkel 3a, 3c, die geradlinig verlaufen und einen diese verbindenden Kreisbogen 3b, der im dargestellten Ausführungsbeispiel als Halbkreisbogen exakt 180° umfasst.

Der Rechen 2 mit seinen Rechenstäben 3 ist gegenüber den Wandungen des Kanals 1 mit entsprechenden perforierten Verkleidungen 9 eingepasst, zudem sind die Kreisbögen 3b mit entsprechenden Abdeckblechen in den Kanal 1 eingepasst.

Im untersten Bereich des Rechens 2 befindet sich eine bewegliche Abprallplatte 12, die den Rechen zum Boden 1a des Kanals 1 abdichtet. Der Rechen 2 ist um ca. 50 mm über dem Kanalboden 1a fixiert, wodurch eine bodennahe Strömung ungehindert durch die Rechenstäbe 3 gelangen kann und etwaige Sandablagerungen hinter den Rechen 2 transportieren kann.

Der Rechen 2 ist zudem mit einstellbaren Stützen 10 auf dem Kanalrand 1b fixiert, die es erlauben, die Neigung des Rechens 2 und dessen Rechenstäben 3 in Winkeln von beispielsweise 50°, 60° oder 70° einzustellen. Mit dem sich verändernden Neigungswinkel kann entweder eine größere Filtrationsfläche im Flüssigkeitsstrom vorgesehen werden, wodurch auch mehr Grobstoffe aus dem Flüssigkeitsstrom entfernt werden oder aber bei steilerer Stellung des Rechens 2 der Strömungswiderstand vermindert werden, um die Durchflussleistung des Rechens 2 zu erhöhen

In Durchströmrichtung D betrachtet dem Rechen 2 und dessen Rechenstäben 3 vorgelagert sind mehrere seitlich angeordnete weitere Rechenstäbe 30 vorgesehen, die im Wesentlichen deckungsgleich zu dem äußeren Rechenstab 3 des Rechens 2 verlaufen und insoweit ebenfalls U-förmig ausgebildet sind. Diese vorgelagerten Rechenstäbe 30 bilden eine weitere seitliche Filtrationsfläche, wenn der Flüssigkeitsstrom in Durchströmrichtung D durch den Kanal 1 geleitet wird.

Es ist offensichtlich, dass der in den Flüssigkeitsstrom innerhalb des Kanals 1 eintauchende Rechen 2 mit seinen Rechenstäben 3, 30 mitgeführte Grobstoffe zurückhält, die aufgrund ihrer Abmessungen nicht durch die stets gleich breit ausgebildeten Freiräume zwischen benachbarten Rechenstäben 3, 30 hindurchtreten können.

Um diese zurückgehaltenen Grobstoffe vom Rechen 2 zu entfernen, ist eine Harke 4 vorgesehen, die zwischen einer ersten, aus der Figur 2 ersichtlichen Endposition 4a am freien Ende der ersten, gemäß Figur 1 rechten Schenkel 3a in eine zweite Endposition 4b am freien Ende der zweiten, gemäß Figur 1 linken Schenkel 3c bewegbar ist. Dazu ist die Harke 4 ausgehend von der ersten Endposition 4a zunächst linear entlang der ersten Schenkel 3a bis zu den Kreisbögen 3b, von dort in einer Drehbewegung entlang der Kreisbögen 3b bis zu den zweiten Schenkeln 3c und von dort linear entlang der zweiten Schenkel 3c bis zur zweiten Endposition 4b am freien Ende der zweiten Schenkel 3c und auch in Gegenrichtung wieder zurück bis zur ersten Endposition 4a verfahrbar.

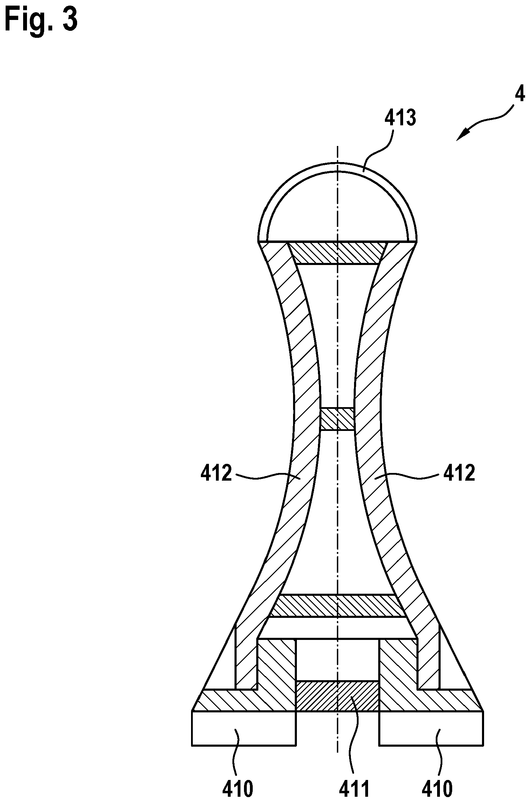

Wie insbesondere aus der Seitenansicht gemäß Figur 3 ersichtlich, weist dazu die Harke 4 eine über die gesamte Breite der ersten bzw. zweiten Schenkel 3a, 3c verlaufende und auf den ersten bzw. zweiten Schenkeln 3a, 3c aufliegende Schiene 411 auf. Die Schiene 411 umfasst auf ihrer den Rechenstäben 3 zugewandten Seite mehrere voneinander nach Maßgabe der Freiräume zwischen benachbarten Rechenstäben 3 angeordnete und voneinander beanstandete vorstehende Zinken 410, die stets und ununterbrochen in den zugeordneten Freiräumen zwischen benachbarten Rechenstäben 3 in Eingriff stehen. Zudem können auch entsprechende Zinken vorgesehen sein, die in die Freiräume der zusätzlichen Rechenstäbe 30 eingreifen.

Die Harke 4 ist mit einem Ende an einem Winkeltrieb 13a befestigt, der sich im mittleren Bereich des Rechens 2 zwischen dem ersten und zweiten Schenkel 3a, 3c des innersten Rechenstabes 3 befindet. Der Winkeltrieb 13a wird über eine entlang ihrer Längsachse teleskopierbare Antriebswelle 13 angetrieben, die ihrerseits von einem im oberen Bereich der Rechenanlage außerhalb des Kanals 1 und des darin geführten Flüssigkeitsstromes angetriebenen Antriebsmotor 5b in Rotation versetzt werden kann. Der Antriebsmotor 5b bildet insoweit gemeinsam mit der Antriebswelle 13 und dem mit der Antriebswelle 13 verbundenen Winkeltrieb 13a einen Schwenkantrieb für die Harke 4.

Darüber hinaus ist auch ein Linearantrieb für die Harke 4 vorgesehen, der von zwei seitlich des Rechens 2 angeordneten Gewindestangen 6 und darauf längsverschieblich ablaufenden Spindelmuttern 6a gebildet ist, die ihrerseits über eine Traverse mit dem Winkeltrieb 13a verbunden sind. Die Gewindespindeln 6 werden von einem Antriebsmotor 5a angetrieben, der ebenfalls außerhalb des Kanals 1 angeordnet ist.

Zur Reinigung des Rechens 2 wird demgemäß zunächst die Harke 4 aus ihrer ersten Endposition 4a durch Betätigung des Linearantriebs aus Gewindespindel 6 und Spindelmutter 6a in den Übergangsbereich zu den Kreisbögen 3b linear entlang der ersten Schenkel 3a verfahren, bis die Spindelmuttern 6a die in der Figur 1 dargestellte untere Endposition erreichen, in der die am Winkeltrieb 13a befestigte Harke 4 exakt im Übergang zwischen den ersten Schenkeln 3a und den Kreisbögen 3b positioniert ist.

Sodann wird der Schwenkantrieb durch Betätigung des Antriebsmotors 5b betätigt, welcher über den Winkeltrieb 13a die Harke 4 in einer Drehbewegung entlang der Kreisbögen 3b bis zu den zweiten Schenkeln 3c verschwenkt. Nunmehr kann erneut über den Linearantrieb eine lineare Aufwärtsbewegung der Spindelmuttern 6a entlang der Gewindespindeln 6 durch entsprechende Aktivierung des Antriebs 5a bewirkt werden, sodass die Harke 4 geradlinig entlang der zweiten Schenkel 3c bis zur zweiten Endposition 4b am freien Ende der zweiten Schenkel 3c angehoben wird.

Dabei nimmt die Harke auf der nach oben weisenden Seite eines an der Harke 4 vorstehenden Schiebers 412 die von der Schiene 411 und den Zinken 410 abgenommenen Grobstoffe vom Rechen 2 mit, die infolge der beidseitig konkaven Ausformung des Schiebers 412 von einem Herunterfallen vom Schieber 412 abgehalten werden. Zugleich beugt die konvexe Ausformung der den Rechenstäben 3 abgewandten Anströmkante 413 am Schieber 412 Turbulenzen im Flüssigkeitsstrom vor, sodass die Grobstoffe zuverlässig aus dem Flüssigkeitsstrom bis zur zweiten Endposition 4b von der Harke 4 herausgefördert werden. Von dort gelangen sie über eine zugeordnete Übernahmeeinrichtung 11 zu einem Spiralförderer 15, der die Grobstoffe zur Entsorgung abführt.

Beim nächsten Durchlauf fährt die Harke 4 zunächst aus der zweiten Endposition 4b entlang der zweiten Schenkel 3c bis zu dem Übergang zu den Kreisbögen 3b, durchläuft die Kreisbögen 3b entlang einer Drehbewegung bis zu den erste Schenkeln 3a und fährt von dort linear bis zur ersten Endposition 4a, die entsprechend mit einer weiteren Übernahmeeinrichtung 11 zum Spiralförderer 15 ausgestattet ist.

Die erfindungsgemäße Rechenanlage erreicht dadurch eine hohe Reinigungsfrequenz, wobei die Zinken 410 der Harke 4 permanent in den jeweiligen Zwischenräumen zwischen benachbarten Rechenstäben 3 in Eingriff sind und während des Betriebs der Harke 4 nicht eingefädelt werden müssen. Ebenfalls steht die Harke auch mit den vorgelagerten weiteren Rechenstäben 30 in permanentem Reinigungseingriff.

Der mittlere Bereich des Rechens 2 zwischen dem ersten und zweiten Schenkel 3a, 3c des innersten Rechenstabes, in welchem die teleskopierende Antriebswelle 13 verläuft, wird überdies über eine mit Durchbrechungen versehene Abdeckung 8, beispielsweise ein gelochtes Blech abgedeckt, welches den Winkeltrieb 13a freigibt, jedoch permanent nach Art einer Jalousie zwischen federbelasteten Wickeltrommeln 7a, 7b im oberen und unteren Bereich der Rechenanlage aufgewickelt wird. Diese Abdeckung 8 ist in Durchströmrichtung D betrachtet vor der teleskopierenden Antriebswelle 13 angeordnet, die überdies in ihrer eingezogenen verkürzten Längenausdehnung in einer am höchsten Punkt angeordneten Aufnahme 13b eingezogen werden kann.

Die exakte Ausrichtung aller Rechenstäbe 3 wird durch einen Rahmen 20 und entsprechende Stützstreben 21 sichergestellt, die stromabwärts die Rechenstäbe 3 miteinander verbinden.

Die vorangehend erläuterte Rechenanlage zeichnet sich durch die Drehung der Harke 4 im Kanal 1 aus, wodurch keine Ketten oder Seile für den Antrieb der Harke 4 notwendig sind, die immer wieder Grund für Störungen im Stand der Technik darstellen.

Die Zinken 410 der Harke 4 befinden sich immer in den Freiräumen zwischen benachbarten Rechenstäben 3, 30, sodass kein Verklemmen und keine Bruchgefahr durch Wiedereinführung der Zinken auftreten kann. Zudem wird durch diesen permanenten Eingriff die Verletzungsgefahr für Fische im Flüssigkeitsstrom signifikant verringert.

Sämtliche Rechenstäbe 3, 30 sind äquidistant zueinander angeordnet, sodass die erfindungsgemäße Rechenanlage hohe Filtrations- bzw. Rückhalteeffizienz erreicht.

Durch zusätzlich angeordnete seitwärts gerichtete Filtrationsflächen kann die Durchflussleistung ohne großen Niveauanstieg vor dem Rechen 2 erhöht werden.

Durch die spezielle Formgestaltung der Harke 4 können überdies große und schwere Grobstoffe leicht aus dem Flüssigkeitsstrom entfernt werden.

Die Bewegung der Harke 4 zwischen ihren beiden Endpositionen 4a, 4b kann in an sich bekannter Weise durch eine Zeitmessung oder eine Erfassung der Wasserspiegel WS1 vor dem Rechen 3 bzw. eine Erfassung der Wasserspiegeldifferenz zwischen WS1 vor dem Rechen und WS2 nach dem Rechen 2 ermittelt und initiiert werden.

### Bezugszeichenliste:

- 1:: Kanal
- 1a:: Kanalboden
- 1b:: Kanalrand
- 2:: Rechen
- 3:: Rechenstab
- 3a:: erste Schenkel
- 3b:: Halbkreisbogen
- 3c:: zweite Schenkel
- 4:: Harke
- 4a:: erste Endposition
- 4b:: zweite Endposition
- 5a:: Antriebsmotor
- 5b:: Schwenkantriebsmotor
- 6:: Linearantrieb
- 6a:: Spindelmutter
- 7a:: Wickeltrommel
- 7b:: Wickeltrommel
- 8:: Abdeckung
- 9:: Verkleidung
- 10:: einstellbare Stützen
- 11:: Übernahmeeinrichtung
- 12:: Abprallplatte
- 13:: Antriebswelle
- 13a:: Winkeltrieb
- 13b:: Aufnahme
- 15:: Spiralförderer
- 20:: Rahmen
- 21:: Stützstreben
- 30:: weiterer vorgelagerter Rechenstab
- 410:: Zinken
- 411:: Schiene
- 412:: Schieber
- 413:: Anströmkante

- D:: Durchströmrichtung
- WS1:: Wasserspiegel vor dem Rechen
- WS2:: Wasserspiegel hinter dem Rechen

## Patentansprüche

1. Rechenanlage zur mechanischen Entfernung von Grobstoffen aus einem Flüssigkeitsstrom, umfassend einen Rechen (2) mit mehreren äquidistant voneinander beabstandeten Rechenstäben (3) und eine von einem Antrieb bewegbare und zwischen die Rechenstäbe (3) greifende Harke (4), **dadurch gekennzeichnet, dass** die Rechenstäbe (3) in einer Durchströmrichtung (D) des Flüssigkeitsstromes betrachtet U-förmig ausgebildet und als Schar von Parallelkurven angeordnet sind und jeweils erste und zweite Schenkel (3a, 3c) und einen diese verbindenden Kreisbogen (3b) umfassen und die Harke (4) von einer ersten Endposition (4a) am freien Ende der ersten Schenkel (3a) linear entlang der ersten Schenkel (3a) bis zu den Kreisbögen (3b), von dort in einer Drehbewegung entlang der Kreisbögen (3b) bis zu den zweiten Schenkeln (3c) und von dort linear entlang der zweiten Schenkel (3c) bis zu einer zweiten Endposition (4b) am freien Ende der zweiten Schenkel (3c) und wieder zurück bewegbar ist.

2. Rechenanlage nach Anspruch 1, **dadurch gekennzeichnet, dass** der Antrieb der Harke (4) einen Linearantrieb und einen Schwenkantrieb umfasst, die unabhängig voneinander steuerbar sind.

3. Rechenanlage nach Anspruch 2, **dadurch gekennzeichnet, dass** der Linearantrieb von einer drehbar angetriebenen Gewindespindel (6) und einer linear auf dieser verfahrbaren Spindelmutter (6a) gebildet ist, die mit der Harke (4) verbunden ist.

4. Rechenanlage nach Anspruch 2 oder 3, **dadurch gekennzeichnet, dass** der Schwenkantrieb von einer von einem Antriebsmotor (5b) drehbaren und entlang ihrer Längsachse teleskopierbaren Antriebswelle (13) und einem mit der Antriebswelle (13) verbundenen Winkeltrieb (13a) gebildet ist, der mit der Harke (4) verbunden ist.

5. Rechenanlage nach Anspruch 4, **dadurch gekennzeichnet, dass** die Antriebswelle (13) im mittleren Bereich des Rechens (2) zwischen dem ersten und zweiten Schenkel (3a, 3c) des innersten Rechenstabes verläuft und in Durchströmrichtung (D) der Antriebswelle (13) vorgelagert eine mit Durchbrechungen versehene Abdeckung (8) des mittleren Bereiches vorgesehen ist.

6. Rechenanlage nach einem der Ansprüche 1 bis 4, **dadurch gekennzeichnet, dass** die Harke (4) eine auf den Rechenstäben (3) aufliegende Schiene (411) und auf der den Rechenstäben (3) zugewandten Seite vorstehende Zinken (410) aufweist, die zwischen der ersten und zweiten Endposition (4a, 4b) permanent in jeweils einen Freiraum zwischen benachbarten Rechenstäben (3) eingreifen.

7. Rechenanlage nach einem der Ansprüche 1 bis 6, **dadurch gekennzeichnet, dass** die Harke (4) auf ihrer den Rechenstäben (3) abgewandten Seite einen vorstehenden Schieber (412) aufweist, dessen Seiten konkav ausgeformt sind.

8. Rechenanlage nach Anspruch 7, **dadurch gekennzeichnet, dass** eine die Seiten des Schiebers (412) verbindende und den Rechenstäben (3) abgewandte Anströmkante (413) des Schiebers (412) konvex ausgeformt ist.

9. Rechenanlage nach einem der Ansprüche 1 bis 8, **dadurch gekennzeichnet, dass** der ersten und zweiten Endposition (4a, 4b) zugeordnet jeweils eine Übernahmeeinrichtung (11) zur Übernahme von Grobstoffen angeordnet ist.

10. Rechenanlage nach einem der Ansprüche 1 bis 9, **dadurch gekennzeichnet, dass** sie in einem oberseitig offenen Kanal (1) zur Führung des Flüssigkeitsstromes angeordnet ist, wobei die Endpositionen (4a, 4b) oberhalb des Flüssigkeitsstromes angeordnet sind.

11. Rechenanlage nach einem der Ansprüche 1 bis 10, **dadurch gekennzeichnet, dass** dem äußeren Rechenstab (3) vorgelagert mindestens ein weiterer U-förmig gebogener und äquidistant angeordneter Rechenstab (30) vorgesehen ist.
